**Europäisches Patentamt**

**European Patent Office**

**Office européen des brevets**

(19)

(11) Publication number: **0 200 316**
**A1**

(12) # EUROPEAN PATENT APPLICATION

(21) Application number: **86301905.5**

(22) Date of filing: **17.03.86**

(51) Int. Cl.⁴: **F 16 D 55/00**

(30) Priority: **04.04.85 GB 8508970**

(43) Date of publication of application:
**05.11.86 Bulletin 86/45**

(84) Designated Contracting States:
**AT BE CH DE FR GB IT LI LU NL SE**

(71) Applicant: **Nodit Limited**
**Cape House Exchange Road**
**Watford Hertfordshire WD1 7EG(GB)**

(72) Inventor: **Green, David**
**29 Links View Bamford**
**Rochdale Lanceshire, OL11 4DD(GB)**

(74) Representative: **Walters, Frederick James et al,**
**Urquhart-Dykes & Lord 47 Marylebone Lane**
**London W1M 6DL(GB)**

(54) Disc brake assemblies.

(57) A disc brake assembly (11) comprises a wiper or scraper (18, 23) disposed to remove abrasive material from a surface of the disc (12) at or immediately before the point of entry of the disc between the brake pads (14, 20) of the brake assembly in terms of the direction of disc rotation. Preferably there are two wipers or scrapers, one for each disc side, and located on the disc brake assembly at or close to the leading edges of the disc pads. The or each wiper or scraper is mounted on the caliper (13) of the disc brake assembly or on the backplate (21) of the or each brake pad.

FIG.1.

EP 0 200 316 A1

## DISC BRAKE ASSEMBLIES

This invention relates disc brake assemblies.

With such assemblies, when fitted to vehicles which operate for a substantial part of their working lives in off-road environments such, for example, as farm or forestry land, construction sties, mines, quarries and gravel pits and in which the vehicles can often run, even at very low speeds, in deep mud or slurry, the discs of the disc brake assemblies are continuously coated with mud or slurry which invariably contains hard or abrasive particles.

In such conditions the mud or slurry operates in the manner of a grinding paste resulting in rapid brake pad and disc wear. This rapid wear occurs both when the brakes are on and off when the mud or slurry is forced between the brake pad and disc surfaces by the motion of the disc, thereby causing abrasion of both surfaces of the brake assembly. When the brake is applied the additional pressure between pad and disc further exacerbates the rate of wear. Additionally, particles of abrasive material may become embedded in the relatively softer brake pad surface thereby changing its carefully designed friction characteristics and continuing the high rate of wear even when the vehicle is running in less arduous conditions.

It is not uncommon for the disc pad material life to be reduced from a normal standard in excess of 20,000 kms to as little as 50 to 100 kms and consequently for the disc operating life to be reduced from 200,000 kms to less than 5,000 kms, resulting in the need to replace the brake pads after only a few hours operation, or the brake disc after only a few days operation. The cost of brake pads and discs and that of the loss of service entailed can thus be the major considerationin the overall operating cost of the vehicle.

It is therefore an object of the present invention to provide a disc brake assembly operational in the aforesaid environmental conditions which has a substantially increased operating life compared with the present.

This object, i.e. the reduction of high wear, is achieved, according to the invention, by excluding, as much as possible, abrasive material, for example mud or slurry from the contacting parts of the brake assembly, i.e. from the disc surfaces and the brake pad surfaces.

One solution would be total enclosure of the disc brake assembly but this is considered undesirable since wheel rotation would still require a dynamic seal which itself would be subject to the same abrasion but more particularly the heat generated by braking would be prevented from dissipation.

Accordingly, the object of the present invention is achieved by providing a disc brake assembly comprising a wiper or scraper disposed to remove abrasive material from a surface of the disc at or immediately before the point of entry of the disc between the brake pads of the brake assembly in terms of the direction of disc rotation.

Preferably, there are two wipers or scrapers, one for each disc side, and located on the disc brake assembly at or close to the leading edges of the disc pads.

Preferably, the or each wiper or scraper is mounted on the caliper of the disc brake assembly.

Preferably, each brake pad mounts the scraper or wiper on its backplate.

The present invention consequently also includes within its scope a brake pad comprising a backplate, friction material secured to the backplate, and, at the leading edge of the brake pad, when the latter is fitted in a disc brake assembly, a scraper or wiper adapted to remove abrasive material from the brake disc.

Preferably the or each scraper or wiper is a flexible blade.

Preferably the or each flexible scraper blade is disposed on the caliper or the brake pad to make continuous contact with the brake disc in both on and off-brake conditions, whereby abrasive material is deflected from the swept area of the brake disc by the rotating motion of the latter.

Preferably the or each flexible scraper blade is fabricated from a non-corroding metal, or a plastics material or a reinforced vulcanised elastomer.

Embodiments of the present invention will now be described, by way of example, with reference to the accompanying drawing, in which :-

Fig. 1 is a perspective view of a wheel hub and a disc brake assembly according to the present invention;

Fig. 2 is a side view of the disc brake assembly;

Fig. 3 is an end view of the disc brake assembly;

Fig. 4 is a front view of a replaceable disc pad according to the present invention;

Fig. 5 is a fragmentary plan view of the disc pad; and

Fig. 6 is a perspective view of a suitable form of scraper blade.

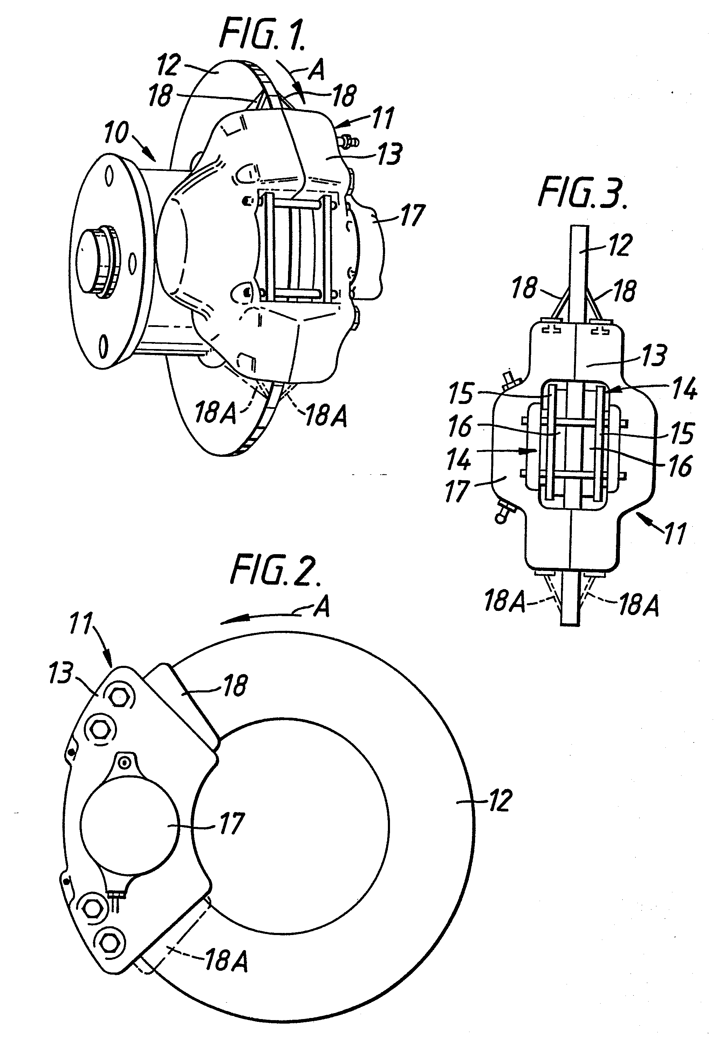

Referring to Figs. 1 to 3, a wheel hub is indicated generally at 10 and the disc brake assembly according to this invention generally at 11.

The brake disc is indicated at 12 and its direction of rotation relative to the brake caliper 13 by the arrow A.

The replaceable brake pads are indicated at 14 and, as usual, each comprises a metal backplate 15 having moulded to one face thereof, i.e. the braking face, a body 16 of friction material.

The brake actuator is generally indicated at 17.

According to this invention the disc brake assembly 11 has fitted to the caliper 13 at each side of the brake disc at the leading edge of the brake pads 14 in terms of the direction of disc rotation a scraper blade 18.

The blades 18 are secured to the caliper 13 in any convenient manner such as to make them easily and readily replaceable. They are preferably secured in position by bolting, clipping or some other form of releasable fastening.

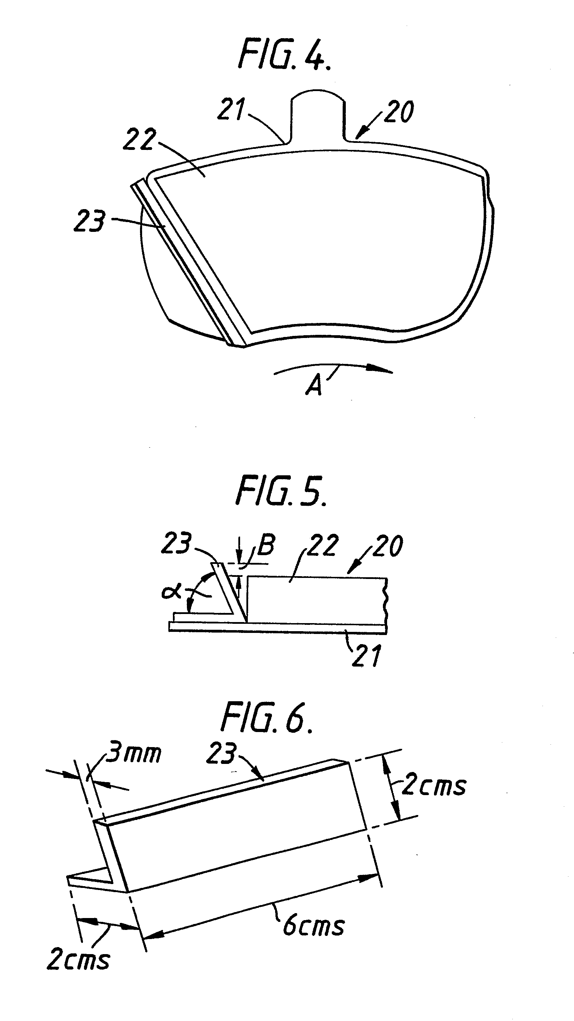

In the embodiment of Figs. 4 and 5 there is shown a replaceable brake pad 20 for a disc brake assembly and comprising the usual metal backplate 21 with a body 22 of friction material moulded thereon. In accordance with this invention, a scraper blade 23 is secured to the backplate 21 by moulding or welding, for example, depending on the material from which the scraper 23 blade is formed.

The direction of brake disc rotation is again indicated by the arrow A.

The distance "B" between the edge of the scraper blade 23 from the surface of the friction body 22 may be, for example, of the order of 0.5mm to 4mm but is preferably between 1.5mm and 2.5mm.

The angle $\alpha$ between the scraper blade 23 and the plane of the brake disc is, for example, between $30^{\circ}$ and $80^{\circ}$ and is preferably between $62^{\circ}$ and $77^{\circ}$ to ensure a maximum removal of particularly viscous mud or slurry.

Referring again to Figs. 1 to 3 scraper blades at the trailing edge of the disc pads 14 are indicated at 18A to provide a wiping action of the brake disc 12 during reversing of the vehicle, again in brake-on and off conditions.

Similarly, a scraper blade may be fitted to the backplate of the disc pad of Figs. 4 and 5 at its trailing edge.

While it is unlikely that scraper blades would be provided only at the brake pad trailing edges, either on the caliper or the brake pads such an arrangement is included within the scope of this invention.

The arrangement of one or more scraper blades on the caliper and one or more on the brake pads is also envisaged.

In its simplest form a scraper blade may consist of a metal, preferably a non-corroding metal, a resilient plastics material, or an elastomeric blade attached to the caliper or pad such that a positive pressure is maintained at its contact area and orientated such that the abrasive material is deflected or wiped away from the swept area by the motion of the disc. The blade may be straight and inclined at an angle to the disc radius or may be shaped such as to follow the caliper or pad leading edge profiles and provide deflection in more than one direction from the disc area. The blade may be a single leaf of material or of a single or multiple Vee section to maintain a more consistent pressure during its operating life, and may be of a size slightly larger than the annulus of the disc swept by the friction material of the disc pad.

Where the scraper blade is attached to the brake pad there is an additional advantage of its replacement along with the brake pad in one operation. In this case as mentioned above, the

- 6 -

blade protrudes above the pad surface but has sufficient flexibility to maintain adequate contact pressure in both the on and off-brake conditions without generating a force sufficient to cause retraction of the brake operating piston.

A preferred blade material is a fibre reinforced vulcanised elastomeric material which has been found to be the most resistant to abrasive damage owing to its ability to deform and more importantly return to its original shape upon impact by very large particles of harder materials. Such a material is capable of being formulated in an infinitely variable range of flexibility, particularly in its bending modulus.

EXAMPLE OF A PREFERRED SCRAPER BLADE MATERIAL

The material is an elastomer compounded with reinforcing filler and fibre, plasticisers, or a thermosetting resin in such a manner that the latter material can be co-vulcanised or cross-linked to provide a wide degree of control of bending modulus. The elastomer may be natural rubber, polyisoprene, polychloroprene, styrene-butadiene, butadiene-acrylonitrile, ethylene-propylene, polyisobutylene, polysiloxane, polynorbonene, a fluoro-elastomer or a carboxylated version of any of these polymers. The reinforcing filler may be carbon black, a silica or silicate, and the fibre may be organic or inorganic of natural or manufactured origin. The thermosetting resin can be of a methacrylate, epoxy, polyester, or silicone type.

An example of a suitable formulation is:-

|  | Parts by Weight |
|---|---|
| Carboxylated Acrylonitrile-butadiene Rubber | 85.0 |
| Trimethylol propane Trimethacrylate | 30.0 |
| Aramid Fibre | 20.0 |

| Carbon Black | 30.0 |
| Mineral oil | 10.0 |
| Stearic Acid | 1.0 |
| Graphite | 5.0 |
| Molybdenum Disulphide | 5.0 |
| Octylated Diphenylamine | 2.0 |
| Dicumyl Peroxide | 2.0 |

The compound is mixed in a conventional internal mixer and sheeted to appropriate thickness using a two-roll mill or calender. The material when cross-linked by heating at 150°C for 30 minutes under a moulding pressure above 200 $N/mm^2$ provides a material of suitable flexibility for mounting to the caliper or for fitting to the leading edge of each disc pad.

The compound moulded to the profile and length illustrated in Fig. 6 was fitted to the leading edges of disc pads with the moulding protruding 2mm above the disc pad surface for test purposes. When fitted to a disc brake assembly at each end of an actual vehicle axle and tested by immersing the axle to half depth in a standard slurry obtained from a motorway construction site the wear rates were compared with standard disc pads with the following results:-

Standard disc pad     - pad thickness reduction 2.5mm

Disc pad fitted
with wiper blade      -    "        "        "     0.22mm

CLAIMS:

1. A disc brake assembly comprising a wiper or scraper disposed to remove abrasive material from a surface of the disc at or immediately before the point of entry of the disc between the brake pads of the brake assembly in terms of the direction of disc rotation.

2. A disc brake assembly according to claim 1, in which there are two wipers or scrapers, one for each disc side, and located on the disc brake assembly at or close to the leading edges of the disc pads.

3. A disc brake assembly according to claim 1 or 2 in which the or each wiper or scraper is mounted on the caliper of the disc brake assembly.

4. A disc brake assembly according to claim 1 or 2, in which each brake pad mounts the scraper or wiper on its backplate.

5. A brake pad for a disc brake assembly and comprising a backplate, friction material secured to the backplate, and, at the leading and/or trailing edge of the brake pad, when the latter is fitted in a disc brake assembly, a scraper or wiper adapted to remove abrasive material from the brake disc.

6. A disc brake assembly as claimed in any one of claims 1 to 4, or a brake pad as claimed in claim 5, in which the or each scraper or wiper is a flexible blade.

7. A disc brake assembly as claimed in any one of claims 1 to 4 and 6 in which the or each flexible scraper blade is disposed on the caliper or the brake pad to make continuous contact with the brake disc in both on and off-brake conditions, whereby abrasive material is deflected from the swept area of the brake disc by the rotating motion of the latter.

8. A disc brake assembly as claimed in any one of claims 1 to 4, 6 and 7, or a brake pad according to claim 5 or 6, in which the or each flexible scraper blade is fabricated from a non-corroding metal, or a plastics material or a reinforced vulcanised elastomer.

9. A disc brake assembly, or a brake pad, as claimed in claim 8 in which the elastomer flexibility of the scraper blade is varied by the addition of a co-curing thermosetting material.

10. A disc brake assembly, or a brake pad according to claim 8 or 9 in which the elastomer from which the scraper blade is formed is an aramid fibre and carbon black reinforced carboxylated acrylonitrile-butadiene elastomer modified with a peroxide cross-linked methacrylate resin.

0200316

FIG.1.

FIG.3.

FIG.2.

## FIG. 4.

## FIG. 5.

## FIG. 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 471 518 (S.A. DBA)<br><br>* Whole document; figures 1-8 * | 1,2,4-6,8 | F 16 D 55/00 |
| | --- | | |
| X | DE-A-2 003 447 (FORD-WERKE AG)<br><br>* Whole document; figures 1-4 * | 1-3,5-8 | |
| | --- | | |
| X | DE-A-2 653 607 (ALFRED TEVES GmbH)<br>* Whole document; figures 1-7 * | 1-8 | |
| | --- | | |
| X | DE-A-1 936 180 (LINCKS)<br><br>* Whole document; figures 1-3 * | 1-3,5,6,8 | |
| | --- | | TECHNICAL FIELDS SEARCHED (Int. Cl.4) |
| X | DE-A-1 934 509 (BERGISCHE STAHL-INDUSTRIE)<br>* Page 3, line 19 - page 5, line 11; page 6, lines 10-18; figures 1-7 * | 1-8 | F 16 D 55/00<br>F 16 D 69/00<br>F 16 D 65/00<br>C 08 L 13/00<br>C 08 K 5/10 |
| | --- | | |
| X | DE-B-1 283 689 (DAIMLER-BENZ AG)<br>* Whole document; figures 1-4 * | 1-3,5-7 | |
| | --- | | |
| A | GB-A-2 054 626 (RAYBESTOS-MANHATTAN INC.) | | |
| | ----- | | |

The present search report has been drawn up for all claims

| Place of search | Date of completion of the search | Examiner |
|---|---|---|
| THE HAGUE | 10-07-1986 | BRAEMS C.G.I. |